# EUROPEAN PATENT APPLICATION

(11) **EP 1 093 741 A1**
(43) Date of publication of application: **25.04.2001**
(21) Application number: 00203655.6
(22) Date of filing: 20.10.2000
(51) Int. Cl.: A47F 5/12, A47F 3/06

(54) **Transport device, blocking device, use of a lifting means, lifting means and method for transforming a transport device in a presentation device**

(30) Priority: 22.10.1999 NL 1013372
(71) Applicant: Van Schie-Instruments, 2627 AW Delft (NL)
(72) Inventor: Van Schie, Petrus Franciscus, 2627 AW Delft (NL)
(74) Representative: Mertens, Hans Victor

(57) **Abstract**

A transport device comprises at least one substantially horizontal plate (32) onto which goods to be transported are to be placed. The at least one plate (32) is supported by support means (33) which are coupled to the plate (32). The support means (33) are coupled to an undercarriage (34) which is provided with displacement means. To convert the transport device into a presentation device, an edge region of the at least one plate (32) is moved in translation in a substantially vertical direction, with the aid of a lifting means (36), for inclining the at least one plate (32).

## Description

The invention relates to a transport device, comprising, at least one substantially horizontal plate onto which goods to be transported are to be placed, support means which are coupled to the at least one plate for supporting it, and an undercarriage, to which the support means are coupled, which undercarriage is provided with displacement means. The invention also relates to a blocking device for use together with the transport device, the use of a lifting means for converting the transport device, the lifting means intended for use in the transport device, and a method for converting the transport device.

Transport devices such as, for example, a Danish trolley, having a number of plates situated above one another, are in widespread use for easy transport of goods from, to and inside warehouses, distribution centres and the like. The goods are placed onto the plates, which are usually provided with an upright rim in order to prevent the goods from falling off the plates.

In many cases, the goods have to be presented before or after transport using the transport device, for example for sale or auction.

One problem is that the transport device is not suitable for the presentation of goods, since the plates are in a horizontal position, so that the goods are difficult to see. At least some of the goods are to some extent hidden from view by surrounding goods and/or a plate positioned above the goods.

A known solution to this problem is to transfer the goods from the transport device to a presentation device, but this has the drawback of being time-consuming and labour-intensive, generally having to be carried out by hand.

Another known solution to the problem is to change the transport means into a presentation means. It is then necessary to carry out the following actions: firstly, the goods have to be removed from the plates, then the plates have to be removed, and then the plates each have to be fitted in an inclined position, and finally the goods have to be put back onto the plates. One drawback of this method is that it is extremely time-consuming and labour-intensive. Another drawback is that additional storage capacity is required, since the goods have to be stored elsewhere while the plates are being removed and refitted. A further drawback of the method is that the plates subsequently have to be removed from the transport device once again and fitted back in the original, horizontal position.

The object of the invention is to eliminate the above drawbacks and, to this end, the invention is characterized by a lifting means for the translational movement of an edge region of the at least one plate in a substantially vertical direction in order to incline the at least one plate. The lifting means may either be fixedly coupled to the transport device or be removable. It is thus possible for goods to be presented on the transport device in an advantageous way, since the at least one plate can very easily be moved into an inclinded position. An important advantage is that the goods do not have to be unloaded or transferred, which saves time and manpower.

In a preferred embodiment, the lifting means can be coupled to the undercarriage and to the support means or a section thereof which is connected to that edge region of the at least one plate which is to be moved in translation. An advantage of this is that, if the transport device comprises a plurality of plates, the plates can be inclined quickly, since all the plates move simultaneously as a result of the support means being coupled to all the plates.

In a further preferred embodiment, the lifting means has a first position, in which the at least one plate is horizontal, and a second positon, in which the at least one plate is inclined. The two positions define two conditions of use of the transport device, namely one for transporting the goods and one for presenting the goods.

Preferably, the at lease one plate, in its inclined position, is at an angle of at least 10 degrees with respect to its horizontal position, which considerably improves the visibility of the goods which are situated on the at least one plate.

In a preferred embodiment, the lifting means comprises two arms, the first arm comprising a first support section for supporting a section of the transport device which is to be moved in translation, and the second arm comprising a second support section which acts on the undercarriage, a rotatable connection being provided between the first arm and the second arm, and rotation of the first arm about the rotatable connection leading to translational movement of the first support section substantially in the vertical direction. One advantage of this is that this lifting means is simple, since it comprises a small number of components. A second advantage is that it is robust and is able to move heavy goods in translation, since the arms, which may be formed, for example from steel bars, given a suitable design, are able to support high mechanical loads.

In preferred embodiments, the rotatable connection is situated on the first arm, between the first support section and an end of the first arm which is remote therefrom, the first arm forming a lever, in which arrangement the first support section is preferably situated at one end of the first arm. One advantage is that the lever formed in this way considerably reduces the force required for lifting, thus facilitating manual operation or operation by foot.

In a further preferred embodiment, the first support section projects transversely with respect to the first arm, preferably in two opposite directions. This ensures that the lifting means can be used on all sides of the transport device, since the first support section can engage both to the left and to the right of the lifting means.

In a further preferred embodiment, the first support section can be adjusted along the first arm. It is also possible for the length of the first arm and/or the second arm to be adjustable. These measures ensure that the lever action of the lever can be altered in order to set the force which is to be exerted on an engagement means, such as a handle or a ball head on the first arm, for the intended translational movement within defined limits.

To prevent the translational movement of the at least one plate being unintentionally reversed by the force of gravity or in some other way, it is preferable to provide the measures for locking the position of the lifting means after the at least one plate has been put in an inclined position. In a first preferred embodiment, the rotatable connection of the lifting means, after the translational movement of the at least one plate, lies outside the imaginery connecting line between the first support section and the second support section, in such a manner that the lifting means has a self-locking action. In a second preferred embodiment, that end of the first arm which is remote from the first support section, on the one hand, and the second arm, on the other hand, are each provided with a hole, which two holes, following the translational movement of the at least one plate, lie in line with one another for receiving a locking pin. In a third preferred embodiment, there is a locking means which is rotatably attached to the second arm and, following the translational movement of the at least one plate, engages in an associated recess in the first arm. In a fourth preferred embodiment, there is a locking means which, following the translational movement of the at least one plate, can be arranged over the second arm and that end of the first arm which is remote from the first support section, these two components being situated close together, in order to fix their position with respect to one another.

Instead of or in addition to the locking means mentioned above, it is advantageously possible to use a blocking device which is used together with the transport device, in which case the blocking device comprises a first support part for coupling to the undercarriage and a second support part for coupling to the support means, which blocking means, following the translational movement of the at least one plate, supports that section of the transport device which has been moved in translation. If the lifting means is of removable design, it can be removed from the transport device after the blocking device has been fitted and can be reused in order to incline one or more plates of other transport devices.

As an advantageous alternative, it is possible for the lifting means to be formed by a jack, which may be permanently or removably attached to the transport device. The jack may be of pneumatic, hydraulic, electrical or mechanical type.

Further advantages of the invention will become clear with referene to the appended drawing, which shows non-limiting exemplary embodiments and in which:
Fig. 1 shows a perspective view of a transport device;
Fig. 2a and 2b respectively show a side view and a plan view of a lifting means according to the invention;
Fig. 3a - 3c show perspective side views, in cross section, of a transport device in order to illustrate the method according to the invention;
Fig. 4a and 4b show another embodiment of a lifting means according to the invention;
Fig. 5a shows a perspective view of a blocking device according to the invention;
Fig. 5b-5d show perspective views of the use of the blocking device shown in Fig. 5a; and
Fig. 6 shows a side view of yet another embodiment of the lifting means according to the invention.

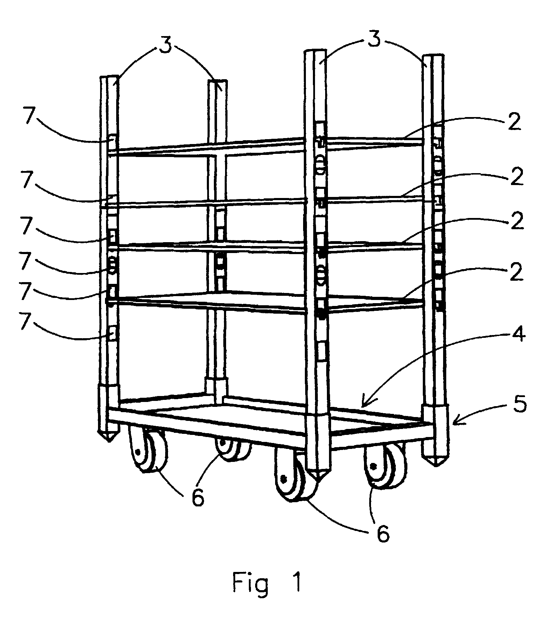

Fig. 1 shows a transport trolley comprising a chassis 4 which is provided with displacement means, in the form of four casters 6 for displacing the transport trolley. The transport trolley also comprises four support bars 3 which have been fitted into designated guides 5 which are situated at the four corners of the chassis 4. The support bars 3 are each provided with recesses 7 at regular intervals. Furthermore, the transport trolley comprises a number of plates 2 which are intended to support the goods to be transported, which plates 2 are hooked into the recesses 7 on the support bars 3 using hooks which are not shown but are connected thereto. The plates 2 may be provided on one or more sides with an upright rim, in order to prevent the goods from falling off the plates 2 during transport. The transport trolley can be pushed or pulled forwards by hand. It is also possible for the trolley to be coupled to another vehicle, transport means or another trolley with the aid of coupling means (not shown), forming an assembly which comprises one or more transport trolleys and can be moved as a train.

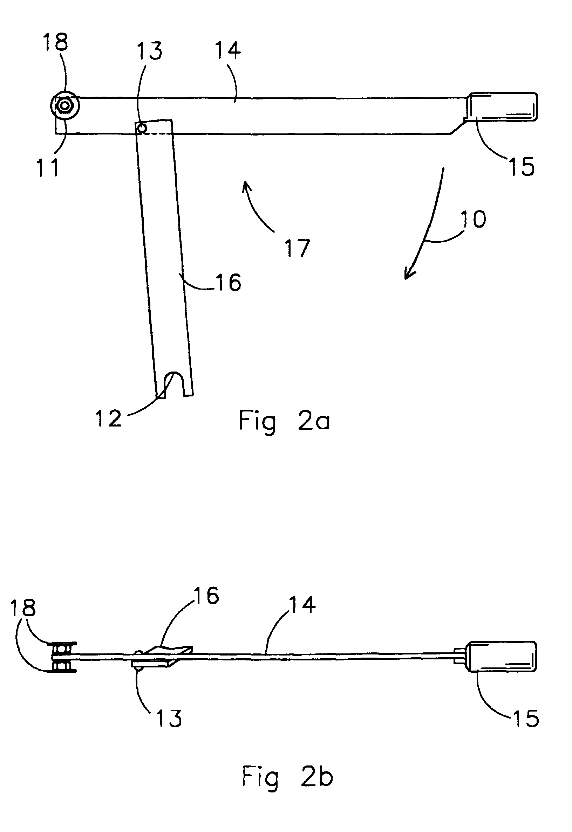

Figs. 2a and 2b show a lifting device 17 which comprises a first arm 14 and a second arm 16. The arms 14, 16 are rotatably connected to one another by means of a pin 13. The lifting device 17 comprises a first support point 11, which is situated on the first arm 14, and a second support point 12, which is situated on the second arm 16. The lifting device 17 can be coupled to a transport trolley with the aid of the support points 11, 12. To this end, the second support point 12 is provided with a recess which can be hooked over an upright rim of the chassis 4 of the transport trolley. In the first support point 11, the lifting device 17 is provided with a coupling member 18, which is shown in more detail in Fig. 2 and is at right angles to the first arm 14, projecting therefrom on the left-hand and right-hand sides. The coupling member 18 can be hooked into one of the recesses of the support bars 3 of the transport trolley shown in Fig. 1. Since the first support point 11 comprises a support member 18 which projects on both sides, the lifting device 17 can be used at a plurality of locations of a transport trolley. For ease of operation, the lifting device 17 is provided with a handle 15, by means of which a force can be exerted on the lifting device 17 during lifting. The first arm 14 comprises a first, short section which extends from the first support point 11 to the pin 13, and a second, longer section which extends from the pin 13 to the handle 15. The result is a lever action which ensures that the force which has to be exerted on the handle 15 is lower than the force required at the first support point 11.

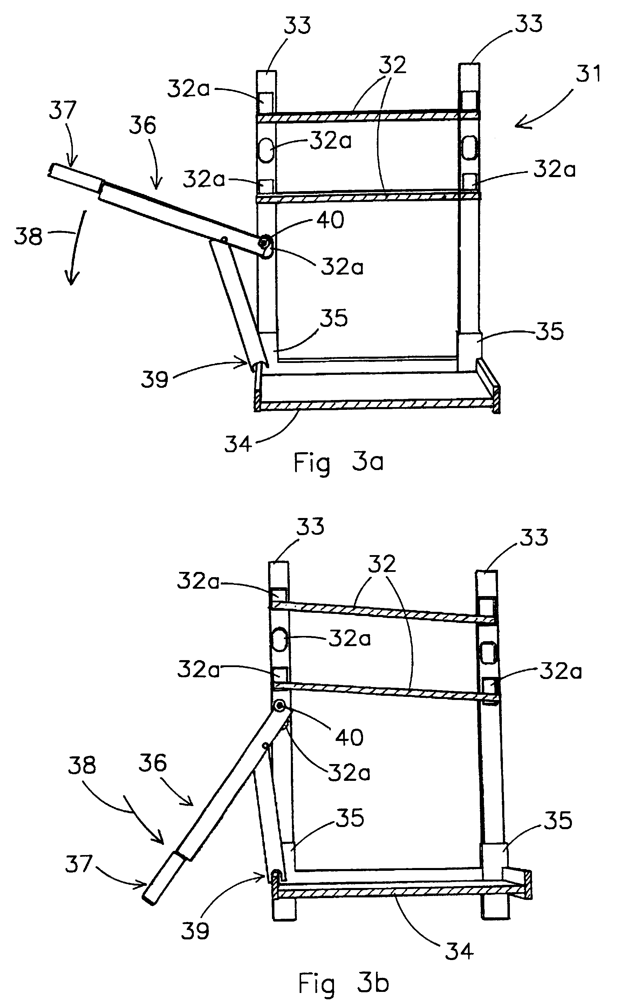

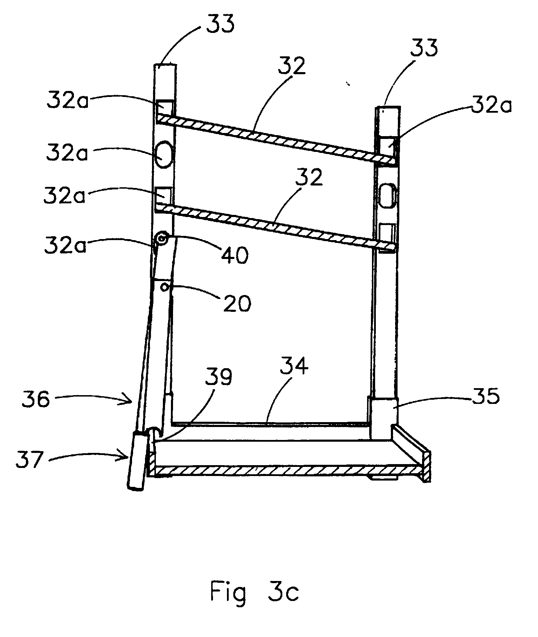

Fig. 3a - 3c show a transport device 31 having flat, horizontal transport plates 32, support bars 33 and a chassis 34. At their ends, the flat transport plates 32 are provided with hooks (not shown), by means of which the transport plates 32 are secured in dedicated recesses 32a in the support bars 33, which recesses are arranged at various locations along the support bars 33, so that the desired number of plates can be arranged at a desired distance from one another in the transport device 31. The support bars 33 are coupled to the chassis 34 by means of recesses 35 in the chassis 34, into which the support bars are fitted with little play. Fig. 3a - 3c also show a lifting means 36. In Fig. 3a, the lifting means 36 is coupled to the chassis 34 by means of a bottom support point 39 and is coupled to a recess in the support bar 33 by means of a top support point 40. If a force is then exerted on the handle 37 of the lifting means 36 in the direction of the arrow 38, the lifting means 36 will, as shown in Fig. 3b, raise the support bar 33 together with the edge regions of the plates 32 which are connected thereto. In the process, the support bar 33 can only move in the vertical direction, since the support bar 33 is coupled to the chassis 34 via the recess 35. If a force continues to be exerted on the handle 37 in the direction of the arrow 38, as illustrated in Fig. 3b, the lifting means 36 raises the support bar 33 coupled to it further. As a result, the support bar 33, as shown in Fig. 3c moves further upwards, and the lifting means 36 will ultimately be situated against the chassis 34 and alongside the support bar 33. The lifting means has a self-locking action, since the rotatable connection 20 between the arms of the lifting means 36, as shown in Fig. 3c, in the position illustrated is situated on that side of the imaginery connecting line between the two support points 39, 40 of the lifting means which faces towards the transport device. It is also possible, as will be explained in more detail below, for there to be other locking means, in order to ensure that the lifting means 36, and therefore the transport device 31, remain in the position shown in Fig. 3c. For example, as the result of two of the four support bars of the transport device 3 being moved upwards as described, the transport device is situated in a presentation position in which the plates 32 are inclined.

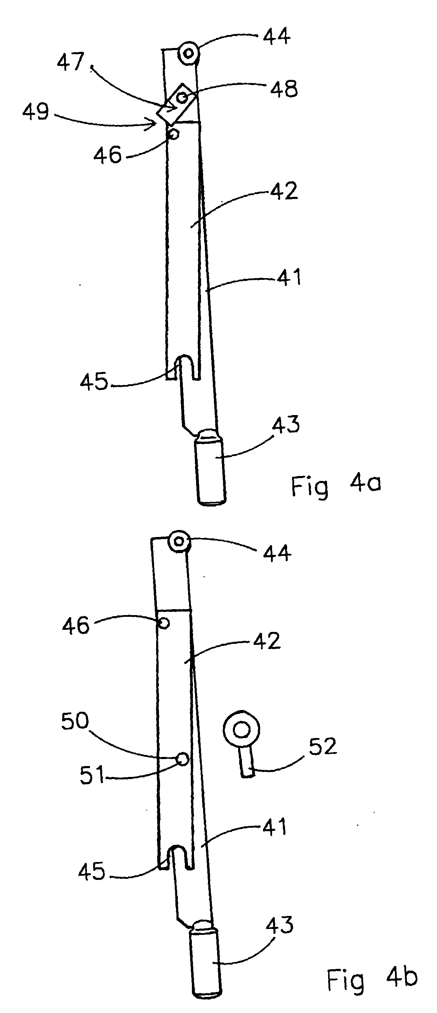

Fig. 4a and 4b both show a lifting means having a first arm 41 and a second arm 42, which arms 41, 42 are rotatably connected by a pin 46. Furthermore, the lifting means each comprise a handle 43, a first support point 44 and a second support point 45 for coupling the lifting means to a transport trolley. In Fig. 4a, the lifting means comprises a pawl 47 which is rotatably connected to the first arm 41 by means of pin 48. If the lifting means has lifted a support bar of the transport device and is therefore in the position shown in Fig. 4a, the pawl 47 latches into a recess 49 in the second arm 42, in order, in this way, to lock the lifting means and therefore to prevent the arms 41, 42 from rotating back, thus also preventing the raised support bar from being lowered. In Fig. 4b, the locking means comprises a hole 50 which is situated in the first arm 41 and a hole 51 which is situated behind it in the second arm 42. The locking means also comprises a locking pin 52 which is provided with an annular handle. If the locking means has lifted a support bar of the transport device and is therefore in the position shown in Fig. 4b, the first hole 50 and the second hole 51 are aligned with one another. The lifting means is locked as a result of the locking pin 52 being fitted through the holes 50, 51.

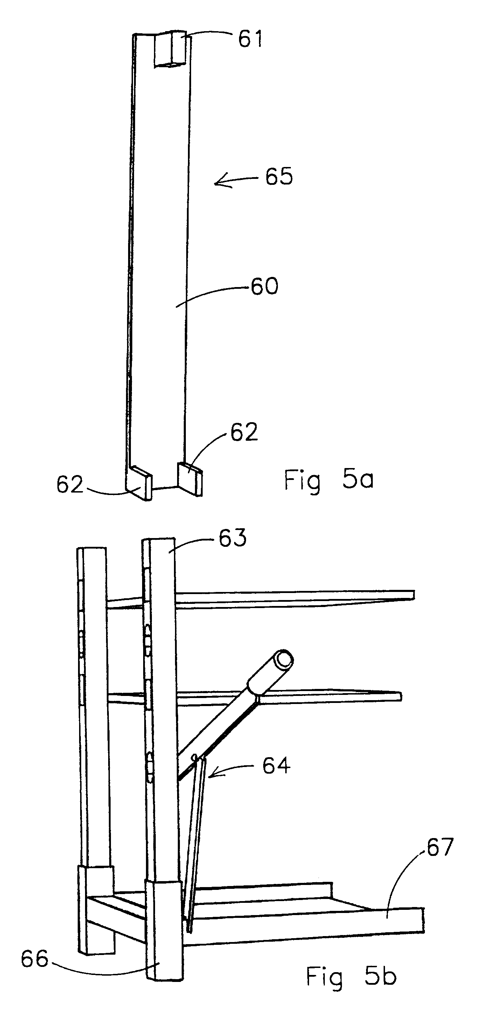

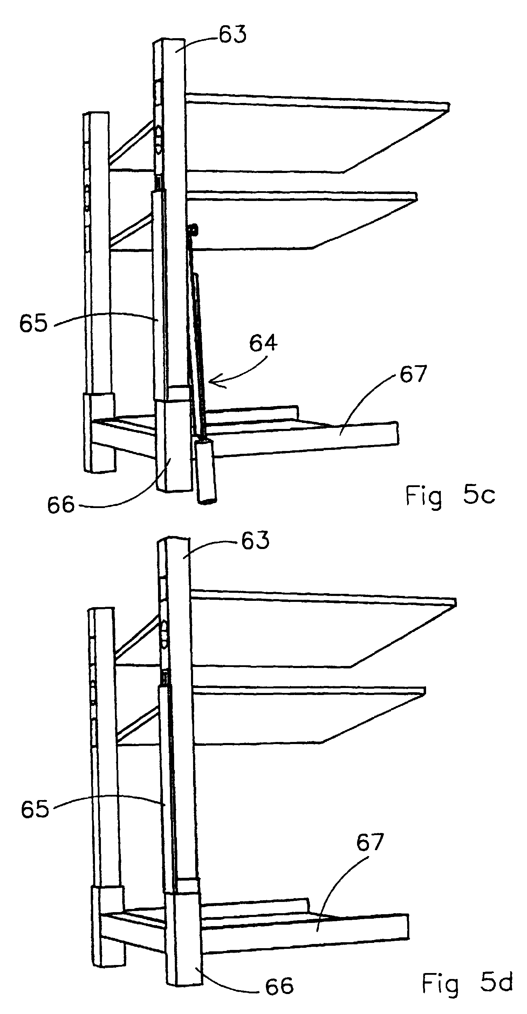

Fig. 5a shows a blocking device 65 which comprises a support section 60, a projection 61 and two supports 62. As shown step by step in Fig. 5b -5d, firstly a first support bar 63 of a transport trolley is moved upwards with the aid of a lifting means 64, as shown in Fig. 5b. Then, when the lifting means has moved the first support bar 63 upwards, as shown in Fig. 5c, the blocking device 65 is pushed over the first support bar, the projection 61 engaging in one of the recesses of the first support bar 63 and the supports 62 resting on a guide 66 of the support bar 63, which guide 66 is connected to the chassis 67. The blocking device 65 can then support the first support bar 63 and thus hold it in the raised position. It is then possible for the lifting means 64 to be removed from the first support bar 63, as shown in Fig. 5d, and the lifting means can be used to raise another support bar of the transport trolley or to raise a support bar of another transport trolley.

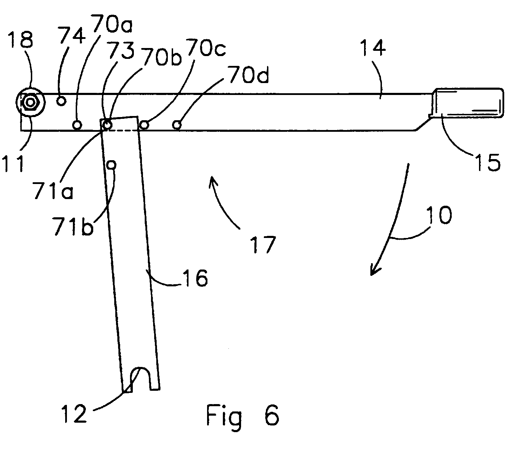

Fig. 6 shows an adjustable lifting means. The lifting means is substantially identical to the lifting means as shown and described in Fig 2a and 2b. However, the lifting means is provided with four holes 70a - 70d which are situated in first arm 14 and two holes 71a and 71b which are situated in the second arm 16. The pin 73 which rotatably connects the first arm 14 and the second arm 16 to one another is removable. In this way, it is possible to select the rotation point of the first arm 14 with respect to the second 16 by securing the pin 73 in one of the holes 70a - 70d on the first arm and one of the holes 71a or 71b on the second arm. It is thus possible to change the length of the arms in order to adapt the lifting device for different designs of transport trolleys or for different load weights which are to be transported using the transport trolleys. Furthermore, it is possible for the first support point 11 on the first arm 14 to be displaced towards the handle as a result of the coupling member 18 being displaced. For this purpose, the first arm 14 may be provided, at the location denoted by 74, with securing means (not shown in more detail) for the coupling member 18.

## Claims

1. Transport device, comprising:
at least one substantially horizontal plate onto which goods to be transported are to be placed;
support means which are coupled to the at least one plate for supporting it; and
an undercarriage, to which the support means are coupled, which undercarriage is provided with displacement means,
characterized by a lifting means for the translational movement of an edge region of the at least one plate in a substantially vertical direction in order to incline the at least one plate.

2. Transport device according to claim 1, characterized in that the lifting means can be coupled to the undercarriage and to the support means or a section thereof which is connected to that edge region of the at least one plate which is to be moved in translation.

3. Transport device according to claim 1 or 2, characterized in that the lifting means has a first position, in which the at least one plate is horizontal, and a second positon, in which the at least one plate is inclined.

4. Transport device according to one of the preceding claims, characterized in that the at lease one plate, in its inclined position, is at an angle of at least 10 degrees with respect to its horizontal position.

5. Transport device according to one of the preceding claims, characterized in that the lifting means comprises two arms, the first arm comprising a first support section for supporting a section of the transport device which is to be moved in translation, and the second arm comprising a second support section which acts on the undercarriage, a rotatable connection being provided between the first arm and the second arm, and rotation of the first arm about the rotatable connection leading to translational movement of the first support section substantially in the vertical direction.

6. Transport device according to claim 5, characterized in that the rotatable connection is situated on the first arm, between the first support section and an end of the first arm which is remote therefrom, the first arm forming a lever.

7. Transport device according to claim 5 or 6, characterized in that the first support section is situated at one end of the first arm.

8. Transport device according to one of claims 5 - 7, characterized in that the first support section projects transversely with respect to the first arm.

9. Transport device according to one of claims 5 - 8, characterized in that the first support section can be adjusted along the first arm.

10. Transport device according to one of claims 5 - 9, characterized in that the length of the first arm and/or of the second arm is adjustable.

11. Transport device according to one of claims 5 - 10, characterized in that the first arm is provided, at its end which is remote from the first support section, with an engagement means for a force to be exerted, by hand or by foot, during the translational movement.

12. Transport device according to one of claims 5 -11, characterized in that the rotatable connection of the lifting means, after the translational movement of the at least one plate, lies outside the imaginery connecting line between the first support section and the second support section, in such a manner that the lifting means has a self-locking action.

13. Transport device according to one of claims 5 -12, characterized in that that end of the first arm which is remote from the first support section, on the one hand, and the second arm, on the other hand, are each provided with a hole, which two holes, following the translational movement of the at least one plate, lie in line with one another for receiving a locking pin.

14. Transport device according to one of claims 5 -13, characterized by a locking means which is rotatably attached to the second arm and, following the translational movement of the at least one plate, engages in an associated recess in the first arm.

15. Transport device according to one of claims 5 -14, characterized by a locking means which, following the translational movement of the at least one plate, can be arranged over the second arm and that end of the first arm which is remote from the first support section, these two components being situated close together, in order to fix their position with respect to one another.

16. Transport device according to one of claims 1 - 4, characterized in that the lifting means comprises a jack.

17. Transport device according to one of the preceding claims, characterized in that it is a Danish trolley.

18. Blocking device for use together with a transport device according to one of the preceding claims, characterized in that the blocking device comprises a first support part for coupling to the undercarriage and a second support part for coupling to the support means, which blocking device, following the translational movement of the at least one plate, supports that section of the transport device which has been moved in translation.

19. Use of a lifting means for converting a transport device according to one of claims 1 - 18 into a presentation device.

20. Lifting means intended for use in a transport device, according to one of claims 1 -18.

21. Method for converting a transport device, which has at least one substantially horizontal plate for goods to be transported to be placed on, support means which are coupled to the at least one plate for supporting the at least one plate, and an undercarriage to which the support means are coupled, which undercarriage is provided with displacement means, into a presentation means, charactized by the translational movement of an edge region of the at least one plate in a substantially vertical direction for inclining the at least one plate.

22. Method according to claim 21, characterized by the translational movement, with respect to the undercarriage, of the support means or a section thereof which is connected to the edge region, which is to be moved in translation, of the at least one plate.

23. Method according to claim 22, comprising the following steps:
- the translational movement of a first support means;
- positioning a blocking device in order to support the first support means; and
- the translational movement of a second support means.
